# FASCICULE DE BREVET EUROPEEN

(11) **EP 4 209 384 B1**
(45) Date de publication et mention de la délivrance du brevet: **23.07.2025**
(21) Numéro de dépôt: 23150072.9
(22) Date de dépôt: 03.01.2023
(51) Int. Cl.: B60L 53/36, B64D 31/00, B64D 27/00, H01F 27/00, H01F 27/32, H01F 27/36, H01F 38/14, B64U 50/38, B64U 80/25, B60L 53/126, B60L 53/38, B64C 39/00, B64F 1/00, H02J 50/10, B64F 1/36, B64U 50/19, H02J 7/00, H02J 7/02, H02J 50/00, H02J 50/40

(54) **DISPOSITIF DE TRANSFERT D'ÉNERGIE ÉLECTRIQUE SANS CONTACT, VÉHICULE VOLANT POURVU DE BATTERIES RECHARGEABLES ET BASE DE RECHARGE ÉLECTRIQUE ÉQUIPÉS DUDIT DISPOSITIF DE TRANSFERT D'ÉNERGIE ÉLECTRIQUE**
KONTAKTLOSE STROMÜBERTRAGUNGSVORRICHTUNG, LUFTFAHRZEUG MIT WIEDERAUFLADBAREN BATTERIEN UND ELEKTRISCHE LADEBASIS MIT DER STROMÜBERTRAGUNGSVORRICHTUNG
NON-CONTACT ELECTRIC POWER TRANSFER DEVICE, FLYING VEHICLE PROVIDED WITH RECHARGEABLE BATTERIES, AND ELECTRIC RECHARGING BASE PROVIDED WITH SAID ELECTRIC POWER TRANSFER DEVICE

(30) Priorité: 10.01.2022 FR 2200137
(43) Date de publication de la demande: 12.07.2023
(73) Titulaire: Airbus SAS, 31700 Blagnac (FR)
(72) Inventeur: CHASSAIGNE, Didier, 31700 BLAGNAC (FR); PERRAUD, Richard, 31700 BLAGNAC (FR); REVEL, Ivan, 31700 BLAGNAC (FR)
(74) Mandataire: Fantin, Laurent

(56) Documents cités:
- WO-A1-2014/042789
- CN-B- 108 688 496
- KR-A- 20160 015 716
- US-A1- 2018 056 794
- US-A1- 2020 055 599

## Description

La présente demande se rapporte à un dispositif de transfert d'énergie électrique sans contact ainsi qu'à un véhicule volant pourvu de batteries rechargeables et à une base de recharge électrique équipés dudit dispositif de transfert d'énergie électrique.

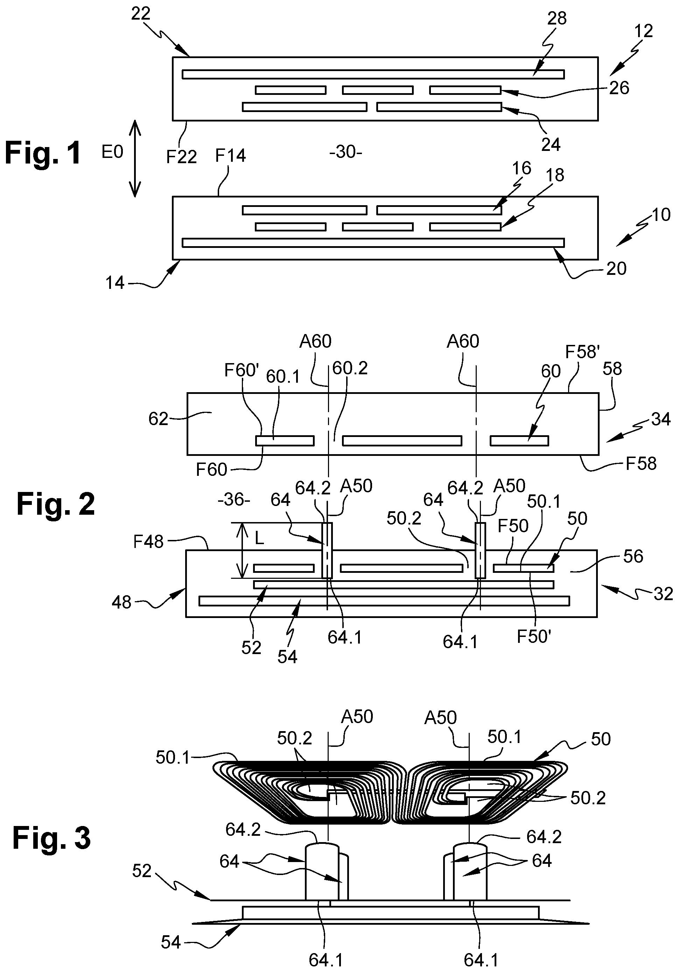

Selon un premier mode de réalisation visible sur la figure 1, un dispositif de transfert d'énergie électrique sans contact comprend un système émetteur 10 d'énergie électrique ainsi qu'un système récepteur 12 d'énergie électrique, les systèmes émetteur et récepteur étant mobiles l'un par rapport à l'autre et configurés pour permettre un transfert d'énergie électrique par induction magnétique lorsqu'ils sont proches l'un de l'autre.

Le système émetteur 10 comprend un premier boîtier 14 qui présente une première face F14 orientée vers le système récepteur 12. Il comprend également, à l'intérieur du premier boîtier 14, en s'écartant de la première face F14, au moins une première bobine 16 dite également émettrice positionnée dans le premier boîtier 14, une couche d'éléments ferromagnétiques 18, en ferrite par exemple, et une plaque de blindage 20.

Le système récepteur 12 comprend un deuxième boîtier 22 qui présente une deuxième face F22 orientée vers le système émetteur 10. Il comprend également, à l'intérieur du deuxième boîtier 22, en s'écartant de la deuxième face F22, au moins une deuxième bobine 24 également dite réceptrice positionnée dans le deuxième boîtier 22, une couche d'éléments ferromagnétiques 26, en ferrite par exemple, et une plaque de blindage 28.

Selon ce premier mode de réalisation, les systèmes émetteur et récepteur 10 et 12 comprennent les mêmes éléments agencés de manière symétrique.

Selon une configuration, les première et deuxième bobines 16, 24 ont chacune une forme en double D et les premier et deuxième boîtiers 14, 22 sont remplis d'une résine de remplissage. En fonctionnement, lors d'un transfert d'énergie électrique, les systèmes émetteur et récepteur 10, 12 sont séparés d'un interstice 30. Les première et deuxième bobines 16, 24 présentent un coefficient de couplage magnétique qui diminue en fonction de l'épaisseur E0 de l'interstice 30 séparant les première et deuxième bobines 16, 24. La présence des couches d'éléments ferromagnétiques 18, 26 permet de conserver un coefficient de couplage magnétique satisfaisant pour assurer le transfert d'énergie électrique, et ce malgré un interstice de l'ordre de 50 cm par exemple.

Même si ce premier mode de réalisation fonctionne avec des interstices importants, les couches d'éléments ferromagnétiques 18, 26 représentant environ un tiers de la masse totale de chaque système émetteur ou récepteur 10, 12, leur présence rend ce dispositif de transfert d'énergie électrique sans contact difficilement exploitable dans le domaine aéronautique.

Selon un deuxième mode de réalisation, les couches d'éléments ferromagnétiques 18, 26 peuvent être remplacées par une couche de résine chargée de particules ferromagnétiques. Cette solution est valable pour les petits dispositifs de transfert d'énergie électrique sans contact. Toutefois, dans le cas d'un dispositif de grandes dimensions adapté à un véhicule volant électrique de type eVTOL (pour electric vertical take-off and landing en anglais) le gain de masse n'est pas significatif.

Le document KR20160015716 divulgue un dispositif de distribution comprenant un récepteur d'énergie sans fil, un système de charge, ainsi qu'un procédé de fonctionnement du système de charge. Le récepteur d'énergie sans fil comprend une feuille de ferrite de forme annulaire et agencée autour d'une bobine réceptrice. Le dispositif de distribution reçoit de l'énergie via la bobine réceptrice sur la base d'un procédé de charge inductive.

Le document US2018056794 divulgue un système de transfert d'énergie sans fil triphasé ainsi qu'un véhicule aérien sans pilote rechargeable. Des bobines de réception de puissance sont installées sur le véhicule, et permettent de charger une batterie dudit véhicule. Le système transfère de l'énergie de bobines de transmission de puissance aux bobines de réception de puissance du véhicule lorsque ledit véhicule se pose sur une plateforme de charge.

Le document WO2014/042789 concerne un appareil pour la transmission sans fil d'énergie, qui comprend des structures conductrices conçues pour produire des champs magnétiques sur la base de courants reçus d'une source électrique, un dispositif de commande conçu pour déterminer un coefficient de couplage respectif entre chacune des structures conductrices, ainsi qu'une autre structure conductrice conçue pour recevoir de l'énergie par l'intermédiaire de l'un des champs magnétiques.

Le document US2020/055599 divulgue un véhicule aérien sans pilote comprenant un ensemble de propulsion, une batterie rechargeable pour fournir de l'énergie électrique à l'ensemble de propulsion, ainsi qu'une bobine de réception d'énergie connectée électriquement à ladite batterie pour fournir une énergie sans contact.

La présente invention vise à remédier à tout ou partie des inconvénients de l'art antérieur.

A cet effet, l'invention a pour objet un dispositif de transfert d'énergie électrique sans contact comprenant un premier système parmi un système émetteur d'énergie électrique et un système récepteur d'énergie électrique ainsi qu'un deuxième système, différent du premier système, parmi un système émetteur d'énergie électrique et un système récepteur d'énergie électrique, le premier système comprenant un premier boîtier qui présente une première face orientée vers le deuxième système lors d'un couplage magnétique des premier et deuxième systèmes ainsi qu'en s'écartant de la première face, au moins une première bobine et une couche d'éléments ferromagnétiques positionnées dans le premier boîtier, la première bobine comportant au moins un premier enroulement autour d'au moins une première zone sans fil et un premier axe d'enroulement perpendiculaire à la première face, le deuxième système comprenant un deuxième boîtier qui présente une deuxième face orientée vers le premier système lors d'un couplage magnétique des premier et deuxième systèmes ainsi qu'au moins une deuxième bobine positionnée dans le deuxième boîtier, la deuxième bobine comportant au moins un deuxième enroulement autour d'au moins une deuxième zone sans fil et un deuxième axe d'enroulement.

Selon l'invention, le premier système comprend au moins une colonnette s'étendant entre des première et deuxième extrémités et présentant une direction longitudinale reliant les première et deuxième extrémités parallèle au premier axe d'enroulement, ladite colonnette traversant la première bobine en passant par une première zone sans fil. Selon l'invention, le deuxième système comprend, dans le deuxième boîtier, une résine chargée de particules ferromagnétiques.

A distance de couplage égale, la présence de colonnettes permet d'augmenter le coefficient de couplage magnétique ou d'en conserver un optimal malgré l'absence de couche d'éléments ferromagnétiques dans le deuxième système. La présence d'une résine chargée de particules ferromagnétiques dans le deuxième système permet d'améliorer le coefficient de couplage magnétique, sans trop alourdir ledit deuxième système.

Selon une autre caractéristique, la première extrémité de la colonnette est séparée de la couche d'éléments ferromagnétiques d'une distance inférieure à 3 mm.

Selon une autre caractéristique, la première extrémité la colonnette est en contact avec la couche d'éléments ferromagnétiques.

Selon une autre caractéristique, la deuxième extrémité de la colonnette est en saillie par rapport à la première face du premier boîtier.

Selon une autre caractéristique, les première et deuxième bobines étant séparées d'une distance de couplage lors d'un couplage magnétique des premier et deuxième systèmes, la colonnette présente une longueur supérieure à 25% de la distance de couplage.

Selon une autre caractéristique, le premier système comprend au moins une colonnette pour chaque première zone sans fil.

Selon une autre caractéristique, la (ou les) colonnette(s) présente(nt) une section représentant au moins 50% de la superficie de la première zone sans fil qu'elle(s) traverse(nt). Selon une autre caractéristique, chaque colonnette est réalisée en matériau ferromagnétique. Selon une autre caractéristique, la deuxième bobine présentant une face intérieure orientée vers la deuxième face du deuxième boîtier, une face extérieure opposée à la face intérieure ainsi qu'une épaisseur correspondant à une distance séparant les faces intérieure et extérieure, le volume de résine chargée se présente sous la forme d'un corps agencé entre la face extérieure de la deuxième bobine et une première face du deuxième boîtier opposée à la deuxième face du deuxième boîtier, ainsi qu'au moins une extension traversant au moins une deuxième zone sans fil de la deuxième bobine, en direction de la deuxième face du deuxième boîtier.

Selon une autre caractéristique, chaque extension du volume de résine chargée a une section égale ou légèrement inférieure à celle de la deuxième zone sans fil qu'elle traverse.

Selon une autre caractéristique, le corps du volume de résine chargée recouvre la moitié de la face extérieure de la deuxième bobine.

Selon une autre caractéristique, le corps présente une épaisseur supérieure ou égale à deux fois l'épaisseur de la deuxième bobine.

Selon une autre caractéristique, chaque extension du volume de résine chargée présente une partie, en saillie par rapport à la face intérieure de la deuxième bobine, qui présente une hauteur supérieure à au moins deux fois l'épaisseur de la deuxième bobine.

Selon une autre caractéristique, la hauteur de la partie en saillie est supérieure ou égale à 5% d'une distance séparant les premier et deuxième systèmes lors d'un couplage magnétique des premier et deuxième systèmes.

L'invention a également pour objet un véhicule volant comprenant au moins une batterie rechargeable ainsi qu'un deuxième système d'un dispositif de transfert d'énergie électrique sans contact selon l'une des caractéristiques précédentes.

L'invention a également pour objet une base de recharge électrique pour véhicule volant comprenant un premier système d'un dispositif de transfert d'énergie électrique sans contact selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif de transfert d'énergie électrique sans contact illustrant un mode de réalisation de l'art antérieur,
- La figure 2 est une représentation schématique d'un dispositif de transfert d'énergie électrique sans contact illustrant un premier mode de réalisation de l'invention,
- La figure 3 est une vue en perspective schématique d'un système émetteur du dispositif de transfert d'énergie électrique sans contact visible sur la figure 2,
- La figure 4 est une vue de dessus schématique du système émetteur visible sur la figure 3,
- La figure 5 est une représentation schématique d'un dispositif de transfert d'énergie électrique sans contact illustrant un deuxième mode de réalisation de l'invention,
- La figure 6 est une vue en perspective schématique du dispositif de transfert d'énergie électrique sans contact visible sur la figure 5,
- La figure 7 est une vue latérale d'un véhicule volant équipé de batteries rechargeables et d'une base de recharge électrique illustrant un mode de réalisation de l'invention.

Selon un premier mode de réalisation visible sur les figures 2 à 4, un dispositif de transfert d'énergie électrique sans contact comprend un système émetteur 32 d'énergie électrique ainsi qu'un système récepteur 34 d'énergie électrique, les systèmes émetteur et récepteur 32, 34 étant mobiles l'un par rapport à l'autre et configurés pour permettre un transfert d'énergie électrique par induction magnétique lorsqu'ils sont proches l'un de l'autre.

En fonctionnement, lors d'un transfert d'énergie électrique, le système émetteur 32 et le système récepteur 34 sont séparés d'un interstice 36 permettant un transfert d'énergie électrique par un couplage magnétique entre les systèmes émetteur et récepteur 32, 34. Les systèmes émetteur et récepteur 32, 34 présentent un coefficient de couplage magnétique en fonction de leurs caractéristiques et de leur éloignement.

Selon une application, un véhicule volant 38 de type eVTOL (pour electric vertical take-off and landing en anglais) comprend au moins une batterie rechargeable 40, un système de régulation 42 configuré pour réguler la charge de la batterie rechargeable 40 et un système récepteur 34 relié au système de régulation 42. Une base de recharge électrique 44, configurée pour recharger la batterie rechargeable 40 du véhicule volant 38, comprend un système émetteur 32 relié à une source d'énergie électrique 46 et incorporé ou non dans la base de recharge électrique 44. Selon cette application, lors du transfert d'énergie électrique, l'interstice 36 présente une épaisseur de l'ordre de 50 cm.

Bien entendu, l'invention n'est pas limitée à cette application.

Selon ce premier mode de réalisation, le système émetteur 32 comprend un premier boîtier 48 qui présente une première face F48 orientée vers le système récepteur 34. Le système émetteur 32 comprend également, à l'intérieur du premier boîtier 48, en s'écartant de la première face F48, au moins une première bobine 50 également dite émettrice positionnée dans le premier boîtier 48, une couche d'éléments ferromagnétiques 52, en ferrite par exemple, et une plaque de blindage 54. Le premier boîtier 48 contient généralement une première résine 56 pour immobiliser et protéger les différents éléments présents dans le premier boîtier 48.

Selon une configuration, la première bobine 50 a une forme en double D. Quel que soit le mode de réalisation, la première bobine 50 comprend au moins un premier enroulement 50.1 autour d'au moins une première zone sans fil 50.2 (le fil du premier enroulement 50.1 étant enroulé autour de la première zone sans fil 50.2), présentant un premier axe d'enroulement A50. Selon un agencement, le premier axe d'enroulement A50 est perpendiculaire à la première face F48. Le premier enroulement 50.1 peut être sensiblement plat. La première bobine 50 présente une face intérieure F50 orientée vers la première face F48 du premier boîtier 48 ainsi qu'une face extérieure F50' opposée à la face intérieure.

Le système récepteur 34 comprend un deuxième boîtier 58 qui présente une première face F58' et une deuxième face F58 opposée à la première face F58' et orientée vers le système émetteur 32 ainsi qu'au moins une deuxième bobine 60 positionnée à l'intérieur du deuxième boîtier 58. Le deuxième boîtier 58 contient généralement une deuxième résine 62 pour immobiliser et protéger les différents éléments présents dans le deuxième boîtier 58.

Selon cette configuration, le système récepteur 34 ne comprend pas de couche d'éléments ferromagnétiques et de plaque de blindage. Ainsi, à dimensions identiques, le système récepteur 34 présente une masse inférieure de 45% à celle d'un système récepteur de l'art antérieur. Par conséquent, le dispositif de transfert d'énergie électrique sans contact selon l'invention est adapté au domaine aéronautique et le système récepteur 34 peut être intégré dans un véhicule volant 38.

Selon une configuration, la deuxième bobine 60 a une forme en double D. Quel que soit le mode de réalisation, la deuxième bobine 60 comprend au moins un deuxième enroulement 60.1, autour d'au moins une deuxième zone sans fil 60.2 (le fil du deuxième enroulement 60.1 étant enroulé autour de la deuxième zone sans fil 60.2), présentant un deuxième axe d'enroulement A60. Selon un agencement, le deuxième axe d'enroulement A60 est perpendiculaire à la deuxième face F58. Le deuxième enroulement 60.1 peut être sensiblement plat. La deuxième bobine 60 présente une face intérieure F60 orientée vers la deuxième face F58 du deuxième boîtier 58 ainsi qu'une face extérieure F60' opposée à la face intérieure.

En fonctionnement, lors d'un couplage magnétique, les premier et deuxième axes d'enroulement A50, A60 des première et deuxième bobines 50, 60 sont sensiblement parallèles. Les première et deuxième bobines 50, 60 sont séparées d'une distance de couplage (distance prise selon une direction approximativement parallèle au premier ou deuxième axe d'enroulement A50, A60) lorsque les systèmes émetteur et récepteur 32 34 sont immobiles l'un par rapport à l'autre et qu'un transfert d'énergie électrique est réalisé entre lesdits systèmes 32, 34.

Selon le premier mode de réalisation visible sur les figures 2 à 4, le système émetteur 32 comprend au moins une colonnette 64 présentant une direction longitudinale parallèle à l'axe d'enroulement A50 et traversant la première bobine 50 en passant par une première zone sans fil 50.2. Chaque colonnette 64 s'étend entre des première et deuxième extrémités 64.1, 64.2. La direction longitudinale correspond à la direction reliant les première et deuxième extrémités 64.1, 64.2 de la colonnette 64.

Dans un plan transversal perpendiculaire à la direction longitudinale, la colonnette 64 présente une section ronde, carrée ou toute autre forme.

Par colonnette 64, on entend un élément qui présente une longueur, dimension prise selon la direction longitudinale, supérieure à toute autre dimension de l'élément.

Selon une particularité, la première extrémité 64.1 de la colonnette 64 est séparée de la couche d'éléments ferromagnétiques 52 d'une distance inférieure à 3 mm.

Selon une configuration, la première extrémité 64.1 de la colonnette 64 est en contact avec la couche d'éléments ferromagnétiques 52. Cette configuration permet d'augmenter l'effet procuré par la colonnette 64.

La deuxième extrémité 64.2 de la colonnette 64 est en saillie par rapport à la première face F48.

Chaque colonnette 64 présente une longueur L (correspondant à la distance séparant les première et deuxième extrémités) supérieure à 25% de la distance de couplage. Selon une configuration, la longueur L de chaque colonnette 64 est approximativement égale à 50% de la distance de couplage. Dans ce cas, le coefficient de couplage magnétique est augmenté de 25% par rapport à une solution sans colonnette.

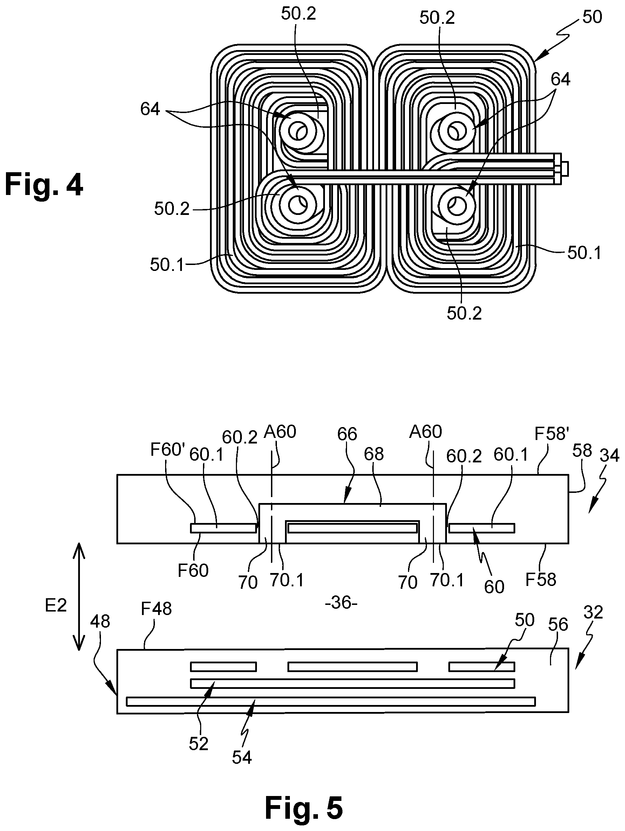

Selon un mode de réalisation, pour chaque premier enroulement 50.1, le système émetteur 32 comprend au moins une colonnette 64 dont la section recouvre au maximum chaque première zone sans fil 50.2 de l'enroulement 50.1. Selon un agencement visible sur les figures 3 et 4, le système émetteur 32 comprend deux colonnettes 64 pour chaque premier enroulement 50.1. Dans le cas d'une première bobine en forme de double D définissant deux premiers enroulements 50.1, le système émetteur 32 comprend quatre colonnettes 64, deux pour chaque premier enroulement 50.1.

Quel que soit l'agencement, pour chaque premier enroulement 50.1, la somme des sections des colonnettes 64 ou la section de l'unique colonnette 64 représente au moins 50% de la superficie de la (ou des) première(s) zone(s) sans fil 50.2, de préférence au moins 75% de ladite superficie, et encore plus préférentiellement au moins 90% de la superficie.

Chaque colonnette 64 peut être pleine ou creuse. La colonnette 64 peut présenter une longueur fixe ou télescopique (i.e. qui s'allonge lors des phases de transfert d'énergie et se rétracte en dehors des phases de transfert d'énergie).

Selon un mode de réalisation, chaque colonnette 64 est réalisée en matériau ferromagnétique.

Dans le cas d'un dispositif de transfert d'énergie électrique sans contact adapté pour un véhicule volant, seul le système émetteur 32 comprend au moins une colonnette 64.

Pour d'autres applications, les systèmes émetteur et récepteur 32, 34 comprennent chacun au moins une colonnette 64. En variante, seul le système récepteur 34 comprend au moins une colonnette 64, le système émetteur n'en disposant pas.

Selon une configuration, la première ou deuxième résine 56, 62 du premier ou deuxième boîtier 48, 58 occupe tout le volume libre du premier ou deuxième boîtier 48, 58.

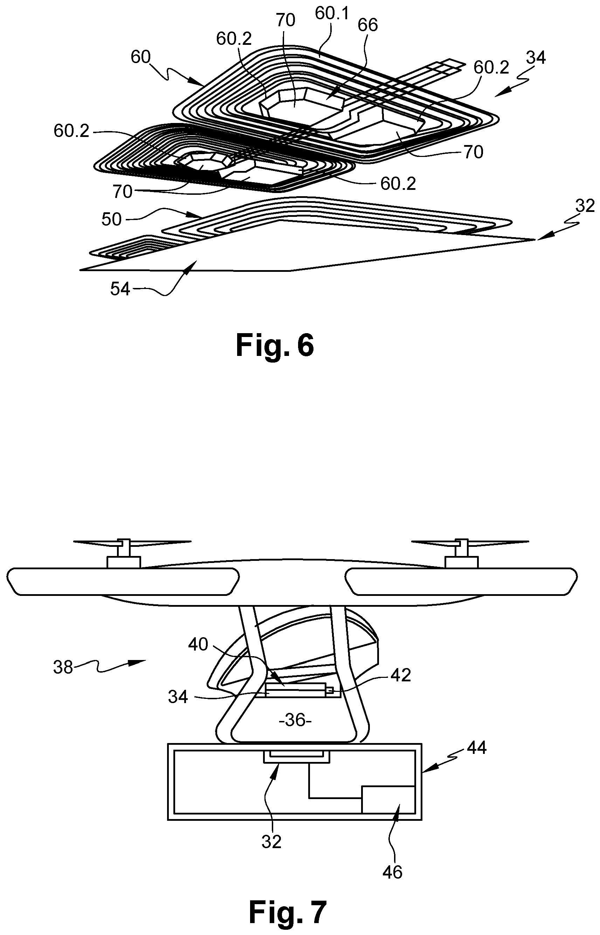

Selon un deuxième mode de réalisation visible sur les figures 5 et 6, le système récepteur 34 ne comprend ni couche d'éléments électromagnétiques ni plaque de blindage. La deuxième résine 62 du deuxième boîtier 58 est chargée de particules ferromagnétiques.

A titre d'exemple, cette résine de remplissage 62 chargée peut être une résine, commercialisée sous la référence TS-1535, comportant des paillettes ferromagnétiques noyées dans une résine polyamide ayant une perméabilité relative comprise entre 40 et 50.

Selon ce deuxième mode de réalisation, la deuxième résine 62 n'occupe pas tout le volume libre du deuxième boîtier 58. La deuxième résine 62 occupe un volume de résine chargée 66 optimisé au regard du ratio entre le coefficient de couplage magnétique et la masse du système récepteur 34.

Selon un agencement, le volume de résine chargée 66 se présente sous la forme d'un corps 68 agencé entre la face extérieure F60' de la deuxième bobine 60 et la première face F58' du deuxième boîtier 58, ainsi qu'au moins une extension 70 traversant au moins une deuxième zone sans fil 60.2 de l'enroulement 60.1 de la deuxième bobine 60, en direction de la deuxième face F58 du deuxième boîtier 58. Selon un agencement, le volume de résine chargée 66 comprend une extension 70 pour chaque deuxième zone sans fil 60.2 de la deuxième bobine 60.

Selon une configuration, le corps 68 du volume de résine chargée 66 est approximativement parallélépipédique. Chaque extension 70 du volume de résine chargée 66 a une section égale ou légèrement inférieure à celle de la deuxième zone sans fil 60.2 qu'elle traverse.

Selon une autre caractéristique, le corps 68 du volume de résine chargée 66 recouvre environ la moitié de la face extérieure F60' de la deuxième bobine 60. Le corps 68 du volume de résine chargée 66 recouvre par exemple entre 45% et 55% de la face extérieure F60' de la deuxième bobine 60. Le corps 68 présente une épaisseur (dimension prise parallèlement au deuxième axe d'enroulement A60) supérieure ou égale à deux fois l'épaisseur (distance séparant les faces intérieure et extérieure) de la deuxième bobine 60.

Chaque extension 70 du volume de résine chargée 66 présente une partie 70.1 en saillie par rapport à la face intérieure F60 de la deuxième bobine 60. La partie 70.1 en saillie par rapport à la face intérieure F60 présente une hauteur (dimension prise parallèlement au deuxième axe d'enroulement A60) supérieure à au moins deux fois l'épaisseur de la deuxième bobine 60. Cette hauteur est supérieure ou égale à 5% de l'interstice 36 lors d'un transfert d'énergie électrique.

Bien que non représentés, les premier et deuxième modes de réalisation sont compatibles. Ainsi, le système émetteur 32 comprend au moins une colonnette 64 telle que décrite précédemment, tandis que le système récepteur 34 comprend une deuxième résine 62 chargée de particules ferromagnétiques telle que décrite précédemment.

Ainsi réalisé, le système récepteur 34 présente un coefficient de couplage magnétique réduit de 10% par rapport à un système émetteur de l'art antérieur comprenant une couche d'éléments ferromagnétiques, mais un gain de masse supérieur à 20% par rapport au même système émetteur de l'art antérieur.

## Revendications

1. Dispositif de transfert d'énergie électrique sans contact comprenant un premier système parmi un système émetteur (32) d'énergie électrique et un système récepteur (34) d'énergie électrique ainsi qu'un deuxième système, différent du premier système, parmi un système émetteur (32) d'énergie électrique et un système récepteur (34) d'énergie électrique, le premier système comprenant un premier boîtier (48) qui présente une première face (F48) orientée vers le deuxième système lors d'un couplage magnétique des premier et deuxième systèmes ainsi qu'en s'écartant de la première face (F48), au moins une première bobine (50) et une couche d'éléments ferromagnétiques (52) positionnées dans le premier boîtier (48), la première bobine (50) comportant au moins un premier enroulement (50.1) autour d'au moins une première zone sans fil (50.2) et un premier axe d'enroulement (A50) perpendiculaire à la première face (F48), le deuxième système comprenant un deuxième boîtier (58) qui présente une deuxième face (F58) orientée vers le premier système lors d'un couplage magnétique des premier et deuxième systèmes ainsi qu'au moins une deuxième bobine (60) positionnée dans le deuxième boîtier (58), la deuxième bobine (60) comportant au moins un deuxième enroulement (60.1) autour d'au moins une deuxième zone sans fil (60.2) et un deuxième axe d'enroulement (A60) perpendiculaire à la deuxième face (F58) ; où
le premier système comprend au moins une colonnette (64) s'étendant entre des première et deuxième extrémités (64.1, 64.2) et présentant une direction longitudinale reliant les première et deuxième extrémités (64.1, 64.2) parallèle au premier axe d'enroulement (A50),
**caractérisé en ce que**
ladite colonnette (64) traversant la première bobine (50) en passant par une première zone sans fil (50.2), la première extrémité (64.1) de la colonnette (64) étant en contact avec la couche d'éléments ferromagnétiques (52), chaque colonnette (64) étant réalisée en matériau ferromagnétique, et **en ce que** le deuxième système comprend, dans le deuxième boîtier (58), une résine chargée de particules ferromagnétiques.

2. Dispositif de transfert d'énergie électrique sans contact selon la revendication précédente, **caractérisé en ce que** la deuxième extrémité (64.2) de la colonnette (64) est en saillie par rapport à la première face (F48) du premier boîtier (48).

3. Dispositif de transfert d'énergie électrique sans contact selon la revendication précédente, **caractérisé en ce que** les première et deuxième bobines (50, 60) sont séparées d'une distance de couplage lors d'un couplage magnétique des premier et deuxième systèmes et **en ce que** la colonnette (64) présente une longueur supérieure à 25% de la distance de couplage.

4. Dispositif de transfert d'énergie électrique sans contact selon l'une des revendications précédentes, **caractérisé en ce que** le premier système comprend au moins une colonnette (64) pour chaque première zone sans fil (50.2).

5. Dispositif de transfert d'énergie électrique sans contact selon la revendication précédente, **caractérisé en ce que** la (ou les) colonnette(s) présente(nt) une section représentant au moins 50% de la superficie de la première zone sans fil (50.2) qu'elle(s) traverse(nt).

6. Dispositif de transfert d'énergie électrique sans contact selon l'une des revendications précédentes, **caractérisé en ce que** la deuxième bobine (60) présente une face intérieure (F60) orientée vers la deuxième face (F58) du deuxième boîtier (58), une face extérieure (F60') opposée à la face intérieure (F60) ainsi qu'une épaisseur correspondant à une distance séparant les faces intérieure et extérieure (F60, F60') et **en ce que** le volume de résine chargée (66) se présente sous la forme d'un corps (68) agencé entre la face extérieure (F60') de la deuxième bobine (60) et une première face (F58') du deuxième boîtier (58) opposée à la deuxième face (F58) du deuxième boîtier (58), ainsi qu'au moins une extension (70) traversant au moins une deuxième zone sans fil (60.2) de la deuxième bobine (60), en direction de la deuxième face (F58) du deuxième boîtier (58).

7. Dispositif de transfert d'énergie électrique sans contact selon la revendication précédente, **caractérisé en ce que** chaque extension (70) du volume de résine chargée (66) a une section égale ou légèrement inférieure à celle de la deuxième zone sans fil (60.2) qu'elle traverse.

8. Dispositif de transfert d'énergie électrique sans contact selon la revendication 6 ou 7, **caractérisé en ce que** le corps (68) du volume de résine chargée (66) recouvre la moitié de la face extérieure (F60') de la deuxième bobine (60).

9. Dispositif de transfert d'énergie électrique sans contact selon l'une des revendication 6 à 8, **caractérisé en ce que** le corps (68) présente une épaisseur supérieure ou égale à deux fois l'épaisseur de la deuxième bobine (60).

10. Dispositif de transfert d'énergie électrique sans contact selon l'une des revendication 6 à 9, **caractérisé en ce que** chaque extension (70) du volume de résine chargée (66) présente une partie (70.1), en saillie par rapport à la face intérieure (F60) de la deuxième bobine (60), qui présente une hauteur supérieure à au moins deux fois l'épaisseur de la deuxième bobine (60).

11. Dispositif de transfert d'énergie électrique sans contact selon la revendication précédente, **caractérisé en ce que** la hauteur de la partie (70.1) en saillie est supérieure ou égale à 5% d'une distance séparant les premier et deuxième systèmes lors d'un couplage magnétique des premier et deuxième systèmes.

12. Dispositif de transfert d'énergie électrique sans contact selon l'une des revendications précédentes, **caractérisé en ce que** le deuxième système est intégré dans un véhicule volant comprenant au moins une batterie rechargeable (40) et **en ce que** le premier système est intégré dans une base de recharge électrique pour véhicule volant.

## Patentansprüche

1. Vorrichtung zur kontaktlosen Übertragung elektrischer Energie mit einem ersten System aus einem System, das elektrische Energie aussendet (32), und aus einem System, das elektrische Energie empfängt (34), sowie mit einem zweiten System, das sich vom ersten System unterscheidet, aus einem System, das elektrische Energie aussendet (32), und aus einem System, das elektrische Energie empfängt (34), wobei das erste System ein erstes Gehäuse (48) umfasst, das eine erste Seite (F48) aufweist, die bei einer magnetischen Kopplung des ersten und zweiten Systems dem zweiten System zugewandt ist, sowie von der ersten Seite (F48) entfernt wenigstens eine erste Spule (50) und eine Schicht aus ferromagnetischen Elementen (52) umfasst, die im ersten Gehäuse (48) angeordnet sind, wobei die erste Spule (50) wenigstens eine erste Wicklung (50.1) um wenigstens einen ersten drahtlosen Bereich (50.2) und eine erste Wicklungsachse (A50) im rechten Winkel zu der ersten Fläche (F48) aufweist, wobei das zweite System ein zweites Gehäuse (58) umfasst, das eine zweite Fläche (F58) aufweist, die bei einer magnetischen Kopplung des ersten und des zweiten Systems dem ersten System zugewandt ist, sowie wenigstens eine zweite Spule (60) umfasst, die in dem zweiten Gehäuse (58) angeordnet ist, wobei die zweite Spule (60) wenigstens eine zweite Wicklung (60.1) um wenigstens einen zweiten drahtlosen Bereich (60.2) und eine zweite Wicklungsachse (A60) im rechten Winkel zu der zweiten Seite (F58) aufweist, wobei das erste System wenigstens eine Säule (64) umfasst, die sich zwischen einem ersten und einem zweiten Ende (64.1, 64.2) erstreckt und eine Längsrichtung aufweist, die das erste und zweite Ende (64.1, 64.2) parallel zur ersten Wickelachse (A50) verbindet, **dadurch gekennzeichnet, dass** die Säule (64) die erste Spule (50) durch einen ersten drahtlosen Bereich (50.2) hindurch durchquert, wobei das erste Ende (64.1) der Säule (64) mit der Schicht aus ferromagnetischen Elementen (52) in Kontakt steht und jede Säule (64) aus ferromagnetischem Material hergestellt ist, und dass das zweite System in dem zweiten Gehäuse (58) ein mit ferromagnetischen Partikeln gefülltes Harz umfasst.

2. Vorrichtung zur kontaktlosen Übertragung elektrischer Energie nach dem vorhergehenden Anspruch, **dadurch gekennzeichnet, dass** das zweite Ende (64.2) der Säule (64) aus der ersten Seite (F48) des ersten Gehäuses (48) vorsteht.

3. Vorrichtung zur kontaktlosen Übertragung elektrischer Energie nach dem vorhergehenden Anspruch, **dadurch gekennzeichnet, dass** die erste und die zweite Spule (50, 60) bei einer magnetischen Kopplung des ersten und des zweiten Systems durch einen Kopplungsabstand voneinander getrennt sind und dass die Säule (64) eine Länge von mehr als 25% des Kopplungsabstands aufweist.

4. Vorrichtung zur kontaktlosen Übertragung elektrischer Energie nach einem der vorhergehenden Ansprüche, **dadurch gekennzeichnet, dass** das erste System wenigstens eine Säule (64) für jeden ersten drahtlosen Bereich (50.2) umfasst.

5. Vorrichtung zur kontaktlosen Übertragung elektrischer Energie nach dem vorhergehenden Anspruch, **dadurch gekennzeichnet, dass** die Säule(n) einen Querschnitt aufweist (aufweisen), der wenigstens 50% der Fläche des ersten drahtlosen Bereichs (50.2) ausmacht, durch den sie verläuft (verlaufen).

6. Vorrichtung zur kontaktlosen Übertragung elektrischer Energie nach einem der vorhergehenden Ansprüche, **dadurch gekennzeichnet, dass** die zweite Spule (60) eine Innenseite (F60), die der zweiten Seite (F58) des zweiten Gehäuses (58) zugewandt ist, eine Außenseite (F60'), die der Innenseite (F60) gegenüberliegt, sowie eine Dicke aufweist, die einem Abstand entspricht, der die Innen- und die Außenseite (F60, F60') trennt, und dass das Volumen des gefüllten Harzes (66) in Form eines Körpers (68) vorliegt, der zwischen der Außenfläche (F60') der zweiten Spule (60) und einer ersten Fläche (F58') des zweiten Gehäuses (58), die der zweiten Fläche (F58) des zweiten Gehäuses (58) gegenüberliegt, angeordnet ist, sowie wenigstens eine Verlängerung (70) aufweist, die durch wenigstens einen zweiten drahtlosen Bereich (60.2) der zweiten Spule (60) in Richtung der zweiten Seite (F58) des zweiten Gehäuses (58) verläuft.

7. Vorrichtung zur kontaktlosen Übertragung elektrischer Energie nach dem vorhergehenden Anspruch, **dadurch gekennzeichnet, dass** jede Verlängerung (70) des Volumens an gefülltem Harz (66) einen Querschnitt hat, der gleich oder etwas kleiner ist als der des zweiten drahtlosen Bereichs (60.2), durch den sie verläuft.

8. Vorrichtung zur kontaktlosen Übertragung elektrischer Energie nach Anspruch 6 oder 7, **dadurch gekennzeichnet, dass** der Körper (68) des Volumens an gefülltem Harz (66) die Hälfte der Außenfläche (F60') der zweiten Spule (60) bedeckt.

9. Vorrichtung zur kontaktlosen Übertragung elektrischer Energie nach einem der Ansprüche 6 bis 8, **dadurch gekennzeichnet, dass** der Körper (68) eine Dicke aufweist, die größer oder gleich der doppelten Dicke der zweiten Spule (60) ist.

10. Vorrichtung zur kontaktlosen Übertragung elektrischer Energie nach einem der Ansprüche 6 bis 9, **dadurch gekennzeichnet, dass** jede Verlängerung (70) des Volumens an gefülltem Harz (66) einen Teil (70.1) aufweist, der in Bezug auf die Innenseite (F60) der zweiten Spule (60) vorsteht und eine Höhe aufweist, die größer ist als wenigstens das Doppelte der Dicke der zweiten Spule (60).

11. Vorrichtung zur kontaktlosen Übertragung elektrischer Energie nach dem vorhergehenden Anspruch, **dadurch gekennzeichnet, dass** die Höhe des vorstehenden Teils (70.1) größer oder gleich 5% eines Abstands ist, der das erste und das zweite System bei einer magnetischen Kopplung des ersten und des zweiten Systems trennt.

12. Vorrichtung zur kontaktlosen Übertragung elektrischer Energie nach einem der vorhergehenden Ansprüche, **dadurch gekennzeichnet, dass** das zweite System in ein Luftfahrzeug integriert ist, das wenigstens eine wiederaufladbare Batterie (40) aufweist, und dass das erste System in eine elektrische Ladestation für ein Luftfahrzeug integriert ist.

## Claims

1. Contactless electrical energy transfer device comprising a first system out of an electrical energy transmitter system (32) and an electrical energy receiver system (34), and a second system, different from the first system, out of an electrical energy transmitter system (32) and an electrical energy receiver system (34), the first system comprising a first housing (48) which has a first face (F48) oriented towards the second system when the first and second systems are magnetically coupled, and moving away from the first face (F48), at least one first coil (50) and a layer of ferromagnetic elements (52) positioned in the first housing (48), the first coil (50) comprising at least one first winding (50.1) around at least one first zone without wire (50.2) and a first winding axis (A50) at right angles to the first face (F48), the second system comprising a second housing (58) which has a second face (F58) oriented towards the first system when the first and second systems are magnetically coupled and at least one second coil (60) positioned in the second housing (58), the second coil (60) comprising at least one second winding (60.1) around at least one second zone without wire (60.2) and a second winding axis (A60) at right angles to the second face (F58); wherein the first system comprises at least one small column (64) extending between first and second ends (64.1, 64.2) and having a longitudinal direction linking the first and second ends (64.1, 64.2) parallel to the first winding axis (A50), **characterized in that** said small column (64) passing through the first coil (50) by passing through a first zone without wire (50.2), the first end (64.1) of the small column (64) being in contact with the layer of ferromagnetic elements (52), each small column (64) being made of ferromagnetic material, and **in that** the second system comprises, in the second housing (58), a resin filled with ferromagnetic particles.

2. Contactless electrical energy transfer device according to preceding Claim, **characterized in that** the second end (64.2) of the small column (64) protrudes with respect to the first face (F48) of the first housing (48).

3. Contactless electrical energy transfer device according to the preceding claim, **characterized in that** the first and second coils (50, 60) are separated by a coupling distance when the first and second systems are magnetically coupled, and **in that** the small column (64) has a length greater than 25% of the coupling distance.

4. Contactless electrical energy transfer device according to one of the preceding claims, **characterized in that** the first system comprises at least one small column (64) for each first zone without wire (50.2).

5. Contactless electrical energy transfer device according to the preceding claim, **characterized in that** the small column or columns have a section representing at least 50% of the surface area of the first zone without wire (50.2) that it or they pass through.

6. Contactless electrical energy transfer device according to one of the preceding claims, **characterized in that** the second coil (60) has an inner face (F60) oriented towards the second face (F58) of the second housing (58), an outer face (F60') opposite the inner face (F60) and a thickness corresponding to a distance separating the inner and outer faces (F60, F60'), and **in that** the volume of filled resin (66) takes the form of a body (68) arranged between the outer face (F60') of the second coil (60) and a first face (F58') of the second housing (58) opposite the second face (F58) of the second housing (58), and at least one extension (70) passing through at least one second zone without wire (60.2) of the second coil (60), towards the second face (F58) of the second housing (58).

7. Contactless electrical energy transfer device according to the preceding claim, **characterized in that** each extension (70) of the volume of filled resin (66) has a section equal to or slightly less than that of the second zone without wire (60.2) that it passes through.

8. Contactless electrical energy transfer device according to Claim 6 or 7, **characterized in that** the body (68) of the volume of filled resin (66) covers half the outer face (F60') of the second coil (60).

9. Contactless electrical energy transfer device according to one of Claims 6 to 8, **characterized in that** the body (68) has a thickness greater than or equal to twice the thickness of the second coil (60).

10. Contactless electrical energy transfer device according to one of Claims 6 to 9, **characterized in that** each extension (70) of the volume of filled resin (66) has a portion (70.1), protruding with respect to the inner face (F60) of the second coil (60), which has a height greater than at least twice the thickness of the second coil (60).

11. Contactless electrical energy transfer device according to the preceding claim, **characterized in that** the height of the protruding portion (70.1) is greater than or equal to 5% of a distance separating the first and second systems when the first and second systems are magnetically coupled.

12. Contactless electrical energy transfer device according to one of the preceding claims, **characterized in that** the second system is positioned in a flying vehicle comprising at least one rechargeable battery (40) and **in that** the first system is positioned in an electrical recharging base for a flying vehicle.
